# FASCICULE DE BREVET EUROPEEN

(11) **EP 0 466 568 B1**
(45) Date de publication et mention de la délivrance du brevet: **18.10.2000**
(21) Numéro de dépôt: 91401880.9
(22) Date de dépôt: 08.07.1991
(51) Int. Cl.: B01J 37/20, B01J 37/16

(54) **Procédé de prétraitement d'un catalyseur par un mélange d'un agent soufre et d'un agent réducteur organique**
Verfahren zur Vorbehandlung eines Katalysators durch eine Mischung aus einem schwefelenthaltenden Mittel und einem organischen Reduktionsmittel
Method for pretreating a catalyst by a mixture of a sulphurised agent and an organic reducing agent

(30) Priorité: 13.07.1990 FR 9009080
(43) Date de publication de la demande: 15.01.1992
(73) Titulaire: EUROPEENNE DE RETRAITEMENT DE CATALYSEURS (en abrégé EURECAT), F-07800 LA VOULTE SUR RHONE (FR)
(72) Inventeur: Roumieu, Raymond, F-26000 Valence (FR); Boitiaux, Jean-Paul, F-78300 Poissy (FR)
(74) Mandataire: Andreeff, François

(56) Documents cités:
- EP-A- 0 181 254
- EP-A- 0 303 525
- EP-A- 0 335 754
- FR-A- 2 476 118
- US-A- 4 177 136
- US-A- 4 551 437

## Description

Dans le domaine du raffinage et de la pétrochimie, et notamment, à titre d'exemple, dans les réactions de reformage catalytique ou d'hydrogénations sélectives des essences, il convient parfois d'atténuer l'activité des catalyseurs. Ainsi on citera le cas des catalyseurs au nickel qui sont d'excellents catalyseurs par exemple d'hydrogénation des aromatiques à tel point qu'ils peuvent provoquer des emballements lors des démarrages de catalyseurs neufs, ou régénérés, avec même des incidents de démarrage et la destruction du réacteur. Il est nécessaire donc de procéder à des traitements de passivation permettant d'éviter ces emballements (run away). Ces traitements consistent généralement à empoisonner irréversiblement par du soufre les sites actifs les plus virulents du nickel qui existent sur le catalyseur neuf ou régénéré.

Ainsi en ce qui concerne plus particulièrement le raffinage et les catalyseurs d'hydrotraitement ou d'hydrogénation à base de fer, cobalt, ou de molybdène, ou de tungstène ou de nickel, les catalyseurs adéquats sont commercialisés et chargés dans les réacteurs sous forme d'oxydes alors que leur forme activée et stable est la forme métallique. Dans l'art antérieur, on commence donc, dans une première étape, par réduire à l'hydrogène dans le réacteur ("in situ") les oxydes à l'état métallique puis pour parer aux inconvénients indiqués ci-dessus, dans une deuxième étape, on diminue l'activité du catalyseur, in situ, par introduction d'une quantité déterminée de soufre généralement 0,1 à 1,2 % en poids de soufre par rapport au poids de catalyseur. Généralement on opère ici à l'aide d'un composé sulfuré tel que le sulfure de carbone, les mercaptans, l'hydrogène sulfuré, les composés thiophéniques, les sulfures et les disulfures, par exemple le diméthylsulfure DMS ou le diméthyldisulfure DMDS. Dans ces procédés de l'art antérieur, la réduction à l'hydrogène (première étape) est effectuée à température assez haute pendant assez longtemps (par exemple pour la réduction de l'oxyde de nickel en nickel, on opère vers 400 °C pendant 14 heures).

Dans EP-A- 181254 est décrit un procédé de présulfuration de catalyseur comprenent une étape (a) d'impregnation par un polysulfure organique et une étape (b) de sulfuration en l'absence d'hydrogène et une etape (c) de réduction à température elevée.

L'objet de l'invention permet d'améliorer les techniques de l'art antérieur et de travailler dans des conditions simplifiées et moins contraignantes pour le raffineur. Selon l'invention, on effectue simultanément (a) l'imprégnation du catalyseur par un composé soufré et (b) la réduction de ce catalyseur. La réduction du catalyseur en outre est réalisée à l'aide d'un composé réducteur organique, donc en l'absence d'hydrogène frais. Cette manipulation est réalisée de préférence "ex situ" c'est-à-dire hors du réacteur ce qui permet au raffineur de ne pas avoir éventuellement à l'effectuer lui-même mais de le faire faire à l'extérieur par un spécialiste des traitements, prétraitements ou des régénérations de catalyseurs. Ladite manipulation étant effectuée en l'absence d'hydrogène frais, le transport ultérieur par camion, avion ou bateau depuis le lieu de prétraitement jusqu'au lieu d'utilisation est sans danger d'explosion puisqu'il n'y a pas de présence d'hydrogène résiduel dans la porosité du catalyseur. Ensuite l'utilisation du catalyseur, c'est-à-dire généralement le raffineur, disposera le catalyseur ainsi prétraité dans son ou ses réacteurs et dans ce ou ces réacteurs, c'est-à-dire "in situ". pourra procéder éventuellement à une réduction à l'hydrogène avec l'avantage de ne pas avoir alors à chauffer son catalyseur aux hautes températures et pendant les longues périodes qui sont exigées lorsque l'on n'effectue pas ledit prétraitement. Ainsi, à titre d'exemple, un catalyseur au nickel réduit selon les techniques de l'art antérieur doit être traité en présence d'hydrogène à 400° C pendant 14 heures ; dans la présente invention, le raffineur pourra se contenter de réduire à l'hydrogène son catalyseur au nickel à 300° C et pendant 3 heures seulement.

Selon l'invention, on pourra traiter non seulement les catalyseurs contenant au moins un métal choisi dans le groupe constitué par le cobalt, le fer, le molybdène, le tungstène et le nickel mais également tous les types de catalyseurs qui ont besoin d'être réduits avant emploi, en particulier les catalyseurs de reformage, d'aromizing (R), d'aromatisation des hydrocarbures comportant 2 à 12 atomes de carbone par molécule, renfermant par exemple au moins un métal noble de la famille du platine et/ou au moins un métal de la famille du rhénium, de la famille de l'étain, de la famille du gallium etc.. Les supports sur lesquels sont déposés le ou les métaux utilisés peuvent être des supports amorphes (alumine, etc.) ou cristallins (zéolites, etc.).

L'invention est réalisée plus particulièrement de la façon suivante.

On procède généralement et de préférence "hors site" (ex-situ) à l'imprégnation du catalyseur par un composé réducteur et par un composé soufré. On opère en solution aqueuse ou en solution organique ou en suspension dans la solution aqueuse ou organique, entre 0 et 50° C, de préférence entre 10 et 40° C, plus particulièrement à température ambiante. Cette imprégnation est généralement réalisée par brassage de la masse catalytique avec le solvant, le composé réducteur et au moins un agent sulfuré. Ce brassage est effectué par tout moyen adéquat. A titre d'exemple on peut utiliser un four rotatif du genre four à louvres décrit dans le brevet US-A-4,551,437 de la demanderesse ou du genre four Louisville (décrit dans la demande de brevet EP-A-409.680 de la demanderesse).

L'agent sulfuré est le diéthanol disulfure ou 2,2, dithiobis éthanol de formule HO-C₂H₄-S-S-C₂H₄-OH (appelé souvent D.E.O.D.S.). Ce disulfure peut être utilisé éventuellement en mélange avec du soufre élémentaire, notamment en poudre.

Lorsqu'on utilise du soufre en poudre, (fleur de soufre) ce dernier est alors utilisé en suspension en mélange avec l'autre composé sulfuré avec en proportions par exemple en poids 5 à 90 % de D.E.O.D.S et 95 à 10 % de soufre élémentaire, plus particulièrement, toujours à titre d'exemple non limitatif, 20 à 50 % de D.E.O.D.S et 80 à 50 % de soufre élémentaire.

Le composé organique réducteur (ou agent réducteur organique) est avantageusement choisi parmi les composés réducteurs décrits dans EP-B-303.525 de la demanderesse et notamment les aldéhydes renfermant 1 à 14 atomes de carbone par molécule (de préférence 2 à 12), les cétones ou polycétones renfermant 3 à 18 (et de préférence 3 à 12) atomes de carbone par molécule, les éthers et les esters renfermant 2 à 14 (de préférence 3 à 12) atomes de carbone par molécule, les alcools ou polyalcools renfermant 1 à 14 atomes (et de préférence 2 à 12) de carbone par molécule et les acides organiques ou polyacides renfermant 1 à 14 (et de préférence 1 à 12) atomes de carbone par molécule. A titre de composé préféré, on citera :
- l'acide formique HCOOH,
- le formiate de méthyle HCOOCH₃,
- le formiate d'éthyle HCOO C₂ H₅,
- le paraldéhyde (CH₃ - CHO)₃,
- l'acétaldéhyde C₂H₄ O,
- le formaldéhyde CH₂O,
- l'alcool méthylique, l'alcool éthylique,
- l'acide acétique, etc...

Lorsque l'on n'opère pas en solution ou en suspension aqueuse mais en solution ou suspension organique, ce qui est souvent préférable, on utilisera à titre de solvant organique de préférence un white spirit tel que défini dans US-A-4,530,917 de la demanderesse, mais éventuellement également tout autre solvant adéquat tel qu'un alcool ou polyalcool, glycol ou polyglycol.

Lorsque l'imprégnation décrite ci-dessus est terminée, on procède alors, par exemple dans le four tournant, à un traitement thermique de la masse catalytique entre 100 et 200° C, généralement entre 130 et 170° C, et plus particulièrement autour de 150° C, pendant 30 minutes à 3 heures, de préférence pendant environ 1 à 2 heures.

A ce stade, le catalyseur (dont l'activité initiale a été matée par empoisonnement des sites les plus actifs) est prêt à être livré au raffineur ou à l'utilisateur qui "in situ" procèdera éventuellement à une réduction à l'hydrogène du catalyseur, par exemple pour catalyseur au nickel entre 250 et 350° C pendant 2 à 4 heures et de préférence entre 280 et 320° C pendant 2,5 à 3,5 heures.

Dans la présente invention, on incorporera avantageusement dans le catalyseur d'une pan 0,05 à 10 % et de préférence 0,2 à 1 % de soufre exprimé en poids de soufre par rapport à la masse de catalyseur et d'autre part 10 ppm à 100 %, de préférence 100 ppm à 50 % et plus particulièrement 1000 ppm à 10 % en poids de composé réducteur par rapport à la masse de catalyseur.

Eventuellement à l'issue dudit procédé, le catalyseur peut subir une réduction à l'hydrogène in situ c'est-à-dire dans la zone réactionnelle prévue pour l'utilisation dudit catalyseur.

Le procédé peut s'appliquer au traitement d'un catalyseur à base d'au moins un oxyde d'un métal actif (déposé sur une matrice amorphe ou cristalline) dont on cherche à réduire l'activité par empoisonnement d'une partie au moins de ses sites actifs, procédé au cours duquel on transforme ex situ la majeure partie dudit oxyde de métal en élément métallique et procédé à l'issue duquel on poursuit in situ la réduction du catalyseur en présence d'hydrogène à une température et pendant une durée de temps inférieure à la température et à la durée de temps qui eurent été nécessaires si le procédé en deux étapes selon l'invention n'avait pas été effectué.

Le procédé peut s'appliquer encore à un traitement réalisé ex situ d'un catalyseur à base d'au moins un métal actif (déposé sur une matrice amorphe ou cristalline) dont on cherche à réduire l'activité par empoisonnement d'une partie au moins de ses sites actifs, procédé à l'issue duquel on poursuit in situ la réduction du catalyseur en présence d'hydrogène.

### Exemple 1

### Essai n° 1

On a préparé deux lots de catalyseur à base d'alumine sur laquelle on a déposé en poids 6 % (exprimé on métal) d'oxyde de nickel.

Un premier lot n° 1 de 100 grammes de catalyseur est imprégné par 0,48 g de DEODS (diéthanoldisulfure) renfermant 42,6 % de soufre en poids, en mélange dans 42 cm³ d'une solution aqueuse d'acide formique à 15 % (volume poreux : 0,42 ml/g catalyseur).

Un deuxième lot n° 2 de 100 grammes du même catalyseur on imprégné par 2,4 g de DEODS en mélange dans 42 cm³ d'une solution aqueuse à 15 % d'acide formique.

A l'issue de cette première étape du procédé selon l'invention, chaque lot de catalyseur subit un traitement thermique à 150° C pendant 1 heure.

Les analyses des catalyseurs ainsi traités sont indiquées dans le tableau Ia :

**TABLEAU Ia**

| | S % | C % | PERTE AU FEU A 450° C (P.A.F. %) |
|---|---|---|---|
| Lot n° 1 | 0,29 | 1,92 | 6,93 |
| Lot n° 2 | 0,80 | 2,03 | 15,20 |

Ce tableau permet de constater qu'une quantité correcte de soufre s'est fixée sur le catalyseur, qu'il reste du carbone et un peu d'eau sur le catalyseur, les quantités de soufre, de carbone et les P.A.D. étant de même ordre de grandeur que celles que l'on peut obtenir par les procédés antérieurs d'incorporation de soufre par le DMS par exemple.

### Essai n° 2

On a préparé deux autres lots n° 3 et n° 4 de catalyseur à base d'alumine sur laquelle on a déposé également en poids 6 % (exprimé en métal) d'oxyde de nickel.

Un lot n° 3 de 100 grammes de catalyseur semblable au lot n° 1 s'en distingue toutefois en ce qu'il est imprégné par 0,48 g de DEODS (diéthanoldisulfure) renfermant 42,6 % de soufre en poids, en mélange dans 42 cm³ d'une solution de formiate de méthyle à 15 % dans un white spirit (volume poreux : 0,42 ml/g catalyseur).

Un lot n° 4 de 100 grammes du même catalyseur et semblable au lot n° 2 s'en distingue toutefois en ce qu'il est imprégné par 2,4 g de DEODS en mélange dans 42 cm³ d'une solution de formiate de méthyle à 15 % dans un white spirit.

De nouveau, comme dans le premier essai, à l'issue de cette première étape du procédé selon l'invention, chaque lot de catalyseur n° 3 et n° 4 subit également un traitement thermique à 150° C pendant 1 heure.

Les analyses des catalyseurs ainsi traités sont indiquées dans le tableau Ib :

**TABLEAU Ib**

| | S % | C % |
|---|---|---|
| Lot n° 1 | 0,29 | 1,92 |
| Lot n° 2 | 0,80 | 2,03 |

Ce tableau permet également de constater qu'une quantité correcte de soufre s'est fixée sur le catalyseur, qu'il reste du carbone sur le catalyseur, les quantités de soufre, de carbone, étant de même ordre de grandeur que celles que l'on peut obtenir par les procédés antérieurs d'incorporation de soufre par le DMS par exemple.

### Exemple 2

Les lots n° 1 et n° 3 sont utilisés en comparaison avec un lot de catalyseur identique contenant également 0,29 % de soufre (en poids) mais introduit à l'aide de DMS et appelé ci-après catalyseur de référence.

Dans l'exemple 2, on teste les catalyseur vis-à-vis de deux réactions :
1. L'hydrogénation des aromatiques (par exemple, conversion du toluène). On a choisi une réaction modèle qui est l'hydrogénation du toluène dans les conditions suivantes :
   - toluène : 10 % poids dans de l'heptane,
   - température : 70° C.
   - pression : 30 bar,
   - LHSV (vitesse spatiale liquide VSL), : 2 litres de charge par litre de catalyseur et par heure.
2. L'hydrogénation des dioléfines mesurée dans une réaction de craquage à la vapeur (steam cracking) par la variation de la MAV (indice d'anhydride maleïque caractéristique de la teneur en dioléfines dans les conditions suivantes :
   - pression : 30 bar,
   - LHSV : 8,
   - T : 100° C,
   - MAV de la charge : 87 (indice d'anhydride maleïque caractéristique de la teneur en dioléfines).

Les résultats sont donnés dans le tableau II, après réduction du catalyseur de référence par de l'hydrogène à 400° C pendant 14 heures et après réduction du catalyseur (initialement prétraité c'est-à-dire préréduit selon l'invention) à l'hydrogène pendant 3 heures pour le lot n° 1 et pendant 2 heures 50 minutes pour le lot n° 3 à diverses températures (200, 250 et 300° C).

**TABLEAU II**

| | T° REDUCTION ° C (à l'hydrogène) | CONVERSION DU TOLUENE % POIDS | MAV DU PRODUIT OBTENU |
|---|---|---|---|
| Catalyseurs de référence | 400°C pendant 14 heures | 4 | 40 |
| Catalyseurs prétraités selon l'invention | 200°C pendant 3 heures | 0 | 69 |
| Lot n° 1 | 250°C pendant 3 heures | 0 | 47 |
| | 300°C pendant 3 heures | 0 | 40 |
| Lot n° 3 | 200°C pendant 2 h 50 minutes | 0 | 69 |
| | 250°C pendant 2 h 50 minutes | 0 | 47 |
| | 300°C pendant 2 h 50 minutes | 0 | 40 |

Dans cet exemple, on a déterminé les conditions opératoires optimales (ici 300° C pendant 3 heures pour le lot n° 1 et pendant 2 heures 50 minutes pour le lot n° 3) pour qu'en fin de réduction à l'hydrogène on parvienne avec le catalyseur prétraitement, c'est-à-dire préréduit selon l'invention, aux mêmes teneurs faibles en dioléfines qu'avec un catalyseur non prétraité et réduit de façon classique en présence d'hydrogène et pendant 14 heures à 400° C.

L'invention permet donc de réduire ensuite à l'hydrogène le catalyseur pendant un temps plus court, et à moins haute température qu'un catalyseur non prérraité selon l'invention (et même pendant un temps légèrement plus court avec le catalyseur du lot n° 3 qu'avec le catalyseur du lot n° 1. Dans le lot n° 1, le DEODS est en solution aqueuse d'acide formique ; dans le lot n° 3, le DEODS est en solution organique de formiate de méthyle).

### Exemple 3

Le lot n° 1 ainsi que le lot n° 2 sont utilisés en comparaison avec un lot d'un catalyseur identique contenant 0,80 % en poids de soufre mais le soufre ayant été introduit à l'aide de DMS et appelé ci-après catalyseur de référence.

Dans l'exemple 3, les catalyseurs qui présentent une bonne inhibition de l'activité hydrogènante des aromatiques ont été testés en hydrogénation d'essence de steam-cracking (craquage à la vapeur ou vapocraquage).

Ce test s'effectue dans les conditions suivantes :
- Pression: : 30 bar,
- LHSV: : 8
- Température: : 100° C.

La charge est une essence industrielle de vapocraquage.

Les résultats sont donnés dans le tableau III. La MAV (indice d'anhydride maleïque) indique la teneur en oléfines et l^{'}I_{Br} (indice de brome) la teneur en oléfines.
- Charge :: MAV = 106
I_{Br} = 46,5 (teneur en oléfines)
S = 46 ppm.

**TABLEAU III**

| | | S | REDUCTION | MAV DU PRODUIT | IBr DU PRODUIT |
|---|---|---|---|---|---|
| Catalyseur de référence | | 0,8 | 400°C pendant 15 h (réduction à l'hydrogène) | 3 | 41,2 |
| Catalyseur prétraité selon l'invention | lot n° 1 | 0,29 | 300°C pendant 4 heures | 3 | 41,5 |
| | lot n° 2 | 0,80 | 300°C pendant 4 heures | 3 | 47,6 |
| | lot n° 3 | 0,29 | 300°C pendant 4 heures | 3 | 41,6 |
| | lot n°4 | 0,80 | 300°C pendant 4 heures | 3 | 47,7 |

On constate qu'en opérant avec des catalyseurs prétraités selon l'invention (lots n° 1 et n° 3 à 0,29 % de soufre) et réduits ensuite à l'hydrogène pendant 4 heures à 300° C, on observe des résultats équivalents à ceux obtenus avec un catalyseur à 0,8 % S, non prétraité selon l'invention, et réduit à l'hydrogène à 400° C pendant 15 heures.

On constate également qu'en opérant avec des catalyseurs prétraités selon l'invention (lots n° 2 et n° 4 à 0,80 % de soufre) et réduits ensuite à l'hydrogène pendant 4 heures à 300° C, on observe par comparaison avec le catalyseur de référence, non prétraité selon l'invention et traité ensuite à l'hydrogène pendant 15 heures à 400° C, qu'en outre, non seulement on ne touche pas aux oléfines présentes dans la charge mais qu'on en gagne même un peu plus.

## Revendications

1. Procédé de prétraitement d'un catalyseur de raffinage ou de pétrochimie contenant au moins un métal sous forme métallique ou sous forme d'oxyde métallique, déposé sur un support, caractérisé en ce que :
a) dans une première étape, on imprègne ledit catalyseur par une solution aqueuse ou organique ou une suspension aqueuse ou organique renfermant d'une part au moins un agent réducteur organique et d'autre part au moins un agent sulfuré qui est le D.E.O.D.S.,
b) dans une deuxième étape, on traite thermiquement le catalyseur ainsi imprégné, à une température comprise entre 100 et 200° C.

2. Procédé selon la revendication 1 de prétraitement d'un catalyseur de raffinage ou de pétrochimie contenant au moins un métal sous forme métallique ou sous forme d'oxyde métallique, déposé sur un support, caractérisé en ce que :
a) dans une première étape, on imprègne ledit catalyseur par une solution aqueuse ou organique ou une suspension renfermant d'une part au moins ledit agent réducteur organique et d'autre part au moins ledit agent sulfuré, cette étape étant réalisée en l'absence d'hydrogène frais ;
b) dans une deuxième étape, on traite thermiquement le catalyseur ainsi imprégné, à une température comprise entre 100 et 200° C.

3. Procédé selon l'une des revendications 1 et 2 dans lequel la première étape est réalisée dans un solvant aqueux ou organique ou dans un mélange de solvants aqueux et organique et dans lequel la deuxième étape est réalisée entre 100 et 200° C pendant 30 minutes à 3 heures.

4. Procédé selon l'une des revendications 1 à 3 dans lequel au cours de la première étape, on introduit sur le catalyseur, en poids par rapport à ce catalyseur 0,05 à 10% d'agent sulfuré, exprimé en soufre, et 10 ppm à 100 % d'agent réducteur.

5. Procédé selon la revendication 4 dans lequel on introduit 0,2 à 1 % d'agent sulfuré, exprimé en soufre, et 100 ppm à 50 % d'agent réducteur.

6. Procédé selon l'une des revendications 1 à 5 dans lequel l'agent réducteur est choisi dans le groupe constitué par les aldéhydes, les cétones, les polycétone, les acides et polyacides organiques, les alcools, les polyalcools, les esters et les éthers.

7. Procédé selon l'une des revendications 1 à 6 dans lequel l'agent réducteur est l'acide formique.

8. Procédé selon l'une des revendications 1 à 7 réalisé dans un solvant organique.

9. Procédé selon la revendication 8 dans lequel la première étape est effectuée dans un solvant à base d'un white spirit.

10. Procédé selon la revendication 9 dans lequel l'agent sulfuré est le D.E.O.D.S. et l'agent de réduction le formiate de méthyle ou d'éthyle.

11. Procédé selon l'une des revendications 1 à 10 réalisé "ex situ".

12. Procédé selon l'une des revendications 1 à 11, réalisé dans un four rotatif.

13. Procédé selon l'une des revendications 1 à 12 dans lequel à l'issue dudit procédé, le catalyseur subit une réduction à l'hydrogène in situ c'est-à-dire dans la zone réactionnelle prévue pour l'utilisation dudit catalyseur ou ex-situ.

14. Procédé selon l'une des revendications 1 à 13 appliqué à un catalyseur à base d'au moins un oxyde d'un métal actif, déposé sur une matrice amorphe ou cristalline, dont on cherche à réduire l'activité par empoisonnement d'une partie au moins de ses sites actifs, procédé au cours duquel on transforme ex situ la majeure partie dudit oxyde de métal en élément métallique et procédé à l'issue duquel on poursuit in situ la réduction du catalyseur en présence d'hydrogène à une température et à la durée de temps qui eurent été nécessaires si le procédé en deux étapes selon l'invention n'avait pas été effectué.

15. Procédé selon l'une des revendications 1 à 14, réalisé ex situ et appliqué à un catalyseur à base d'au moins un métal actif, déposé sur une matrice amorphe ou cristalline, dont on cherche à réduire l'activité par empoisonnement d'une partie au moins de ses sites actifs, procédé à l'issue duquel on poursuit in situ la réduction du catalyseur en présence d'hydrogène.

## Claims

1. Process for the pretreatment of a petrochemical or refining catalyst containing at least one metal in metallic or metallic oxide form and deposited on a support, characterized in that
a) firstly, said catalyst is impregnated with an aqueous or organic solution, or an aqueous or organic suspension containing on the one hand at least one organic reducing agent and on the other at least one sulphur-containing agent:
at least one organic polysulphide mixed with elementary sulphur,
at least one organic disulphide optionally mixed with elementary sulphur,
at least one mineral or organic sulphide optionally mixed with elementary sulphur and
elementary sulphur,
wich is D.E.O.D.S,
b) secondly the thus impregnated catalyst is thermally treated, at a temperature between 100 and 200°C.

2. Process according to claim 1, for the pretreatment of a petrochemical or refining catalyst containing at least one metal in metallic or metallic oxide form and deposited on a support, characterized in that:
a) firstly said catalyst is impregnated by an aqueous or organic solution, or a suspension containing on the one hand at least said organic reducing agent and on the other at least said sulphur-containing agent, performed in the absence of fresh hydrogen, and
b) secondly the thus impregnated catalyst is thermally treated, at a temperature between 100 and 200°C.

3. Process according to one of the claims 1 and 2, wherein the first stage is performed in an aqueous or organic solvent or in a mixture of aqueous and organic solvents and wherein the second stage is performed at between 100 and 200°C for between 30 minutes and 3 hours.

4. Process according to any one of the claims 1 to 3, wherein during the first stage, onto the catalyst are introduced by weight based on said catalyst 0.05 to 10% of sulphur agent (expressed as sulphur) and 10 ppm to 100% reducing agent.

5. Process according to claim 4, wherein introduction takes place of 0.2 to 1% sulphur agent (expressed as sulphur) and 100 ppm to 50% reducing agent.

6. Process according to any one of the claims 1 to 5, wherein the reducing agent is chosen from the group constituted by aldehydes, ketones, polyketones, organic polyacids and acids, alcohols, polyalcohols, esters and ethers.

7. Process according to any one of the claims 1 to 6, wherein the reducing agent is formic acid.

8. Process according to any one of the claims 1 to 7 performed in an organic solvent.

9. Process according to claim 8, wherein the first stage is performed in a solvent based on a white spirit.

10. Process according to claim 9, wherein the sulphur-containing agent is D.E.O.D.S. and the reducing agent is ethyl or methyl formate.

11. Process according to any one of the claims 1 to 10 performed ex situ.

12. Process according to any one of the claims 1 to 11 performed in a rotary furnace.

13. Process according to any one of the claims 1 to 12, wherein, following the said process, the catalyst undergoes a reduction with hydrogen in situ, i.e. in the reaction zone for the use of said catalyst.

14. Process according to any one of the claims 1 to 13 applied to a catalyst based on at least one oxide of an active metal (deposited on an amorphous or crystalline matrix), whose activity is to be reduced by poisoning at least part of the active sites and during which ex situ transformation takes place of most of the said metal oxide into a metallic element and at the end of which the reduction of the catalyst is carried out in situ in the presence of hydrogen at a temperature and for a time which would have been necessary if the two-stage process according to the invention had not been performed.

15. Process according to any one of the claims 1 to 14, performed ex situ and applied to a catalyst based on at least one active metal (deposited on an amorphous or crystalline matrix) and whose activity is to be reduced by poisoning at least part of the active sites and at the end of which the catalyst is reduced in situ in the presence of hydrogen.

## Patentansprüche

1. Verfahren zur Vorbehandlung eines Katalysators zum Raffinieren oder für die Petrochemie, der mindestens ein Metall in Metall- oder Metalloxidform enthält und auf einem Träger aufgebracht ist, dadurch gekennzeichnet, dass:
a) in einer ersten Stufe der besagte Katalysator mit einer wässerigen oder organischen Lösung oder mit einer wässerigen oder organischen Suspension imprägniert wird, die einerseits mindestens ein organisches Reduktionsmittel und andererseits mindestens ein geschwefeltes Mittel, das das D.E.O.D.S ist, enthält,
b) in einer zweiten Stufe der so imprägnierte Katalysator bei einer Temperatur zwischen 100 und 200°C thermisch behandelt wird.

2. Verfahren zur Vorbehandlung eines Katalysators zum Raffinieren oder für die Petrochemie nach Anspruch 1, der mindestens ein Metall in Metall- oder Metalloxidform enthält und auf einem Träger aufgebracht ist, dadurch gekennzeichnet, dass:
a) in einer ersten Stufe der besagte Katalysator mit einer wässerigen oder organischen Lösung oder mit einer Suspension imprägniert wird, die einerseits mindestens das besagte geschwefelte Mittel enthält, wobei diese Stufe ohne frischen Sauerstoff erfolgt,
b) in einer zweiten Stufe, der so imprägnierte Katalysator bei einer Temperatur zwischen 100 und 200°C thermisch behandelt wird.

3. Verfahren nach einem der Ansprüche 1 oder 2, in dem die erste Stute in einem wässerigen oder organischen Lösungsmittel oder in einem Gemisch aus wässerigen und organischen Lösungsmitteln und die zweite Stufe zwischen 100 und 200°C zwischen 30 Minuten und 3 Stunden lang durchgeführt wird.

4. Verfahren nach einem der Ansprüche 1 bis 3, in dem man in dem ersten Schritt im Verhältnis zum Katalysatorgewicht 0,05 bis 10 Gewichtsprozent eines geschwefelten Mittels, das als Schwefel dargestellt ist, und 10 ppm bis 100 Prozent Reduktionsmittel auf den Katalysator leitet.

5. Verfahren nach Anspruch 4, in dem man 0,2 bis 1 Prozent des geschwefelten Mittels, das als Schwefel dargestellt ist, und 100 ppm bis 50 Prozent Reduktionsmittel einleitet.

6. Verfahren nach einem der Ansprüche 1 bis 5, in dem das Reduktionsmittel aus der Gruppe, bestehend aus den Aldehyden, Ketonen, Polyketonen, den organischen Säuren und Polysäuren, den Alkoholen, Polyalkoholen, den Estern und Äthern, ausgesucht wird.

7. Verfahren nach einem der Ansprüche 1 bis 6, in dem das Reduktionsmittel die Ameisensäure ist.

8. Verfahren nach einem der Ansprüche 1 bis 7, das in einem organischen Lösungsmittel erfolgt.

9. Verfahren nach Anspruch 8, in dem die erste Stufe in einem Lösungsmittel auf Leichtölbasis stattfindet.

10. Verfahren nach Anspruch 9, in dem das geschwefelte Mittel das D.E.O.D.S und das Reduktionsmittel Methyl- oder Ethylformiat ist.

11. Verfahren nach einem der Ansprüche 1 bis 10, das außerhalb der Industrieanlage durchgeführt wird.

12. Verfahren nach einem der Ansprüche 1 bis 11, das in einem Drehofen angewandt wird.

13. Verfahren nach einem der Ansprüche 1 bis 12, bei dem der Katalysator am Ende des besagten Verfahrens eine Reduktion mittels Wasserstoff 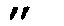 in situ", d.h. in dem für die Anwendung des Katalysators vorgesehenen Reaktionsbereich, oder außerhalb der Anlage erfährt.

14. Verfahren nach einem der Ansprüche 1 bis 13, das bei einem Katalysator auf der Grundlage von mindestens einem aktiven, auf einer amorphen oder kristallenen Matrix aufgebrachten Metalloxid angewandt wird, und bei dem man versucht, die Katalysatoraktivität durch die Vergiftung von mindestens einem Teil der aktiven Katalysatorzentren herabzusetzen, wobei in diesem Verfahren der Großteil des besagten Metalloxids in ein metallisches Element außerhalb der Anlage umgewandelt wird und am Verfahrensende die Katalysatorreduktion in Gegenwart von Sauerstoff 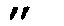 in situ" bei einer Temperatur und einer Dauer fortgesetzt werden, wie sie erforderlich gewesen wären, hätte man das zweistufige erfindungsgemäße Verfahren nicht angewandt.

15. Verfahren nach einem der Ansprüche 1 bis 14, das außerhalb der Anlage und an einem Katalysator auf der Grundlage von mindestens einem Aktivmetall, das auf einer amorphen oder kristallenen Matrix aufgebracht ist, stattfindet, und bei dem man versucht, die Katalysatoraktivität durch die Vergiftung von mindestens einem Teil der aktiven Katalysatorzentren herabzusetzen, wobei am Verfahrensende die Katalysatorreduktion in Gegenwart von Sauerstoff 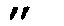 in situ" fortgesetzt wird.
